**Europäisches Patentamt**

**European Patent Office**

**Office européen des brevets**

(19)

(11) Veröffentlichungsnummer: **0 013 934**
A1

(12) **EUROPÄISCHE PATENTANMELDUNG**

(21) Anmeldenummer: **80100197.5**

(22) Anmeldetag: **16.01.80**

(51) Int. Cl.³: **A 01 L 5/00**, A 01 L 3/00

(30) Priorität: **20.01.79 DE 2902189**

(43) Veröffentlichungstag der Anmeldung: **06.08.80**
**Patentblatt 80/16**

(84) Benannte Vertragsstaaten: **AT BE CH DE FR GB IT NL
SE**

(71) Anmelder: **Firma Helmuth Dallmer,
Wiebelsheidestrasse 25, D-5760 Arnsberg 1 (DE)**

(72) Erfinder: **Firma Helmuth Dallmer,
Wiebelsheidestrasse 25, D-5760 Arnsberg 1 (DE)**

(74) Vertreter: **Fritz, Herbert, Dipl.-Ing., Mühlenberg 74,
D-5760 Arnsberg 1 (DE)**

(54) **Pferdehufschuh aus Kunststoff.**

㊵⑦ Ein Pferdehufschuh aus Kunststoff ist durch einen hufeisenförmigen Stahlbügel (40) formstabil gemacht, der von einer zur Trittfläche hin offenen Nut (44) aufgenommen ist. Am Stahlbügel sind Stollen (42a) befestigt. Zur weiteren Stabilisierung können die Enden des Stahlbügels durch ein angeschraubtes Stahlband (43) verbunden sein.

EP 0 013 934 A1

Firma
Helmuth Dallmer
Wiebelsheidestraße 25

5760 Arnsberg 1

## Pferdehufschuh aus Kunststoff

Die Erfindung bezieht sich auf einen Pferdehufschuh aus Kunststoff mit einem hufeisenförmigen Stahlbügel. Dieser wird in eine am Hufschuh gebildete Nut eingesetzt, deren Querschnitt im Bereich der Öffnung etwas schmaler ist als der Stahlbügel.

Der Stahlbügel hat die Aufgabe, die Bogenform des Hufschuhes zu stabilisieren. Er wird der Bogenform des Pferdehufes angepaßt und in die Nut eingesetzt, wobei sich der Hufschuh der Bogenform anpaßt. Dann wird der Hufschuh am Pferdehuf angeklebt. Im Hinblick auf die Rutschsicherheit sind an einer Trittfläche des Hufschuhes vorstehende Stahlelemente mit dem Stahlbügel verbunden.

Bei einem bekannten Hufschuh dieser Art (DOS 27 16 968) ist eine im Querschnitt schwalbenschwanzförmige Nut vorgesehen, die nach oben, also zu der für das Ankleben vorgesehenen ebenen Fläche des Hufschuhes hin offen ist.

Gegen Rutschen sind an der Unterseite des Stahlbügels Stahldorne angebracht, die beim Einsetzen
des Stahlbügels durch den Kunststoff des Hufschuhs geschlagen werden.

Die Aufgabe der Erfindung besteht in der wirtschaftlichen Herstellung eines Hufschuhes der vorgenannten Art, welche eine bessere Rutschfestigkeit gewährleistet.

Die Lösung dieser Aufgabe ergibt sich bei einem
Hufschuh dieser Art mit den Merkmalen der Patentansprüche. Bei einem solchen Hufschuh sind gegen
Rutschen Stahlstollen vorgesehen. Sie können zumindest so breit wie die Nut im Öffnungsbereich
ausgebildet werden. Demzufolge ist ihre Grundrißfläche und demnach ihre Bruch- und Abscherfestigkeit bei weitem größer als bei den Stahldornen,
wodurch auch der Widerstand des Hufschuhes gegen
Rutschen vergrößert wird. Die Nut ist dabei nach
oben hin geschlossen, so daß die obere ebene Hufschuhfläche uneingeschränkt als Klebefläche zur
Verfügung steht.

Gemäß der weiteren Erfindung ist ein zweistufiger
rechteckiger Nutquerschnitt vorgesehen. Er gewährleistet einerseits einen formschlüssigen Halt des
Stahlbügels, andererseits steht in ausreichendem
Maße Platz zur Aufnahme der Stahlstollen bzw. der
zugeordneten Verbindungselemente zur Verfügung.
Gemäß der weiteren Erfindung sind entweder angeformte Stahlstollen oder durch eine Schraubverb-indung lösbare Stahlstollen vorgesehen. Diese kann
der Pferdehalter nach Belieben entfernen, wenn sie
nicht benötigt werden. Zur Verbesserung der Rutschfestigkeit können Stahlbügel eingesetzt werden, die im Grundriß rechteckige angeformte Stollen mit einer Schneide in Stollenlängsrichtung haben. Da die Schneiden jeweils parallel zur Bügelachse angeordnet sind, haben sie jeweils verschiedene Winkelstellungen zur Laufrichtung.

Das Einsetzen des Stahlbügels in die Nut wird erleichtert, wenn der Stahlbügel ausgewalzte, d.h., etwas abgerundete Kanten aufweist.

Der Stahlbügel kann durch Anschrauben eines Stahlbandes im besonderen Maße formstabil gemacht werden. Die Köpfe der Verbindungsschrauben, durch welche jeweils zwischen Stahlband und Stahlbügel eine Ver-bindung hergestellt ist, können zur Ausbildung von Stollen benutzt werden.

Ausführungsbeispiele der Erfindung werden im folgenden näher beschrieben. Dabei wird auf die beiliegenden Zeichnungen Bezug genommen. Es zeigen:

Fig. 1    eine Seitenansicht eines Hufschuhs nach der Erfindung (in Richtung Pfeil I von Fig. 2)

Fig. 2    ist eine Ansicht von unten (Pfeil II von Fig. 1)

Fig. 3    zeigt einen Querschnitt nach III-III von Fig. 2

Fig. 4    zeigt einen weiteren Querschnitt nach IV-IV von Fig. 2

Fig. 5    zeigt in verkleinertem Maßstab perspektivisch den zu einem Hufschuh nach Fig. 1-4 gehörenden Stahlbügel

Fig. 6    ist ein Querschnitt durch einen Hufschuh
          entsprechend Fig. 4 dessen Stahlbügel mit
          lösbaren Stollen versehen ist.

Fig. 7    zeigt perspektivisch einen Teil eines
          Stahlbügels nach Fig. 6

Fig. 8    zeigt perspektivisch von unten einen Teil
          eines Hufschuhs dessen Stahlbügel durch
          ein Stahlband stabilisiert ist.

Der Hufschuh besteht aus einem zweckentsprechenden
Kunststoff. In der Draufsicht ist er hufeisenförmig.
Er wird am Huf des Pferdes angeklebt. Dabei liegt
er mit einer ebenen Fläche 12 unten am Pferdehuf an.
Eine weitere Fläche, die sich innenseitig an einer
angeformten Wand 11 des Hufschuhs befindet, liegt
seitlich am Pferdehuf an. Die beiden Flächen 11 und
12 sind durch einen Klebstoff mit dem Pferdehuf
verbunden.

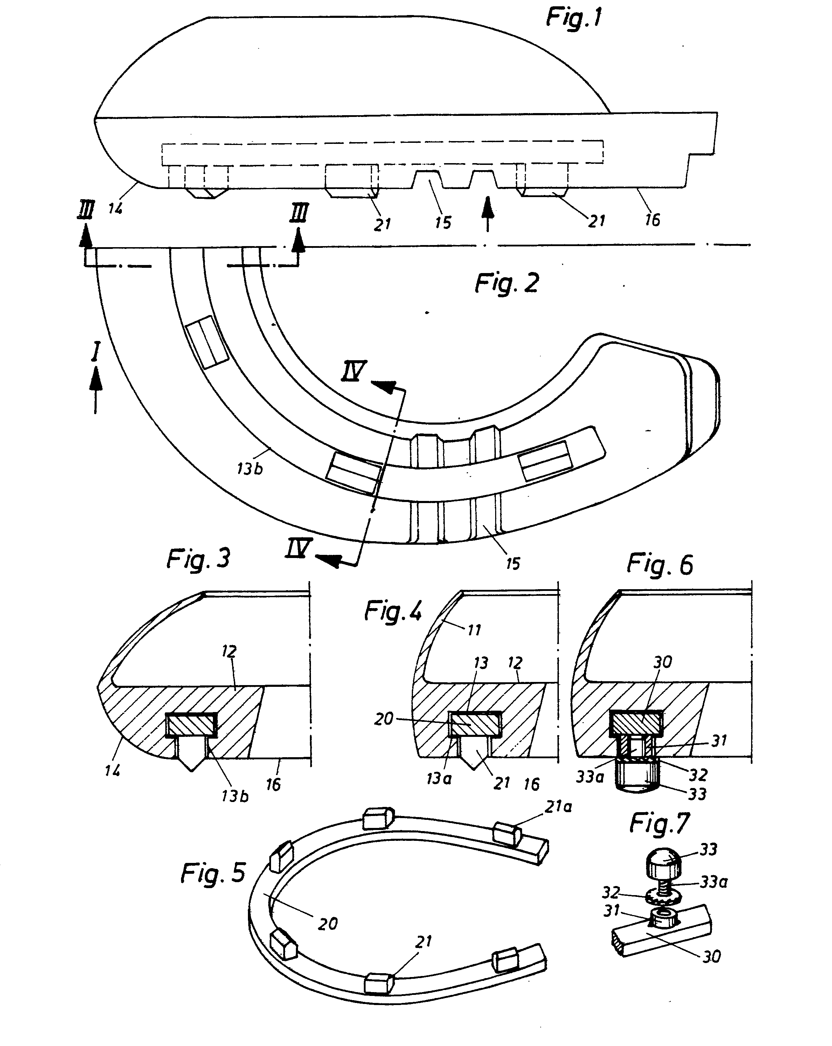

Unten ist am Hufschuh eine im wesentlichen ebene
Trittfläche 16 gebildet. An dieser sind quer zur
Laufrichtung Rillen 15 gebildet. Zur Stabilisierung
des Hufschuhs nach Fig. 1-4 ist ein hufeisenförmiger Stahlbügel 20 nach Fig. 5 vorgesehen. Der
Querschnitt des Stahlbügels ist im wesentlichen
rechteckig. An einer ebenen Fläche des Stahlbügels
sind sechs in der Draufsicht rechteckige Stollen 21
angeformt. An jedem Stollen ist in seiner Längsrichtung eine Schneide 21a gebildet, die parallel
zur Bügelachse angeordnet ist.

Zur Aufnahme des Stahlbügels ist im Hufschuh eine
Nut 13 vorgesehen, deren Querschnitt aus einem
breiteren Rechteck 13a und aus einem schmaleren,
zur Trittfläche 16 hin offenen Rechteck 13 zusammengesetzt ist.

Bevor der Hufschuh angeklebt wird, wird der dem Pferdehuf in der Bogenform angepaßte Stahlbügel durch Druckanwendung in die Nut 13 eingesetzt. Der Hufschuh paßt sich bezüglich seiner Bogenform dem Stahlbügel an. Der Stahlbügel wird formschlüssig in dem breiteren Teil 13a der Nut gehalten. Von dem schmaleren Teil 13b der Nut werden die angeformten Stollen 21 aufgenommen. Zumindest deren Schneiden 21a stehen an der Trittfläche 16 vor.

Im vorderen Bogenbereich des Hufschuhs ist eine Wölbung 14 gebildet, die sich von der Wand 11 bis zur Nut erstreckt.

Der Stahlbügel 30 nach Fig. 6 und 7 ist mit lösbaren Stollen 33 versehen, die eine kreiszylindrische Form aufweisen. An jedem Stollen ist eine Schraube 33a gebildet. Diese wird in eine am Stahlbügel 30 angeschweißte Mutter 31 eingeschraubt. Durch eine zwischengelegte Krallenscheibe 32 ist der beste Halt der Schraubverbindung gesichert.

Wenn der Stahlbügel 30 in den Hufschuh eingesetzt ist, werden die Muttern 31 von dem schmaleren Teil 13b der Nut aufgenommen.

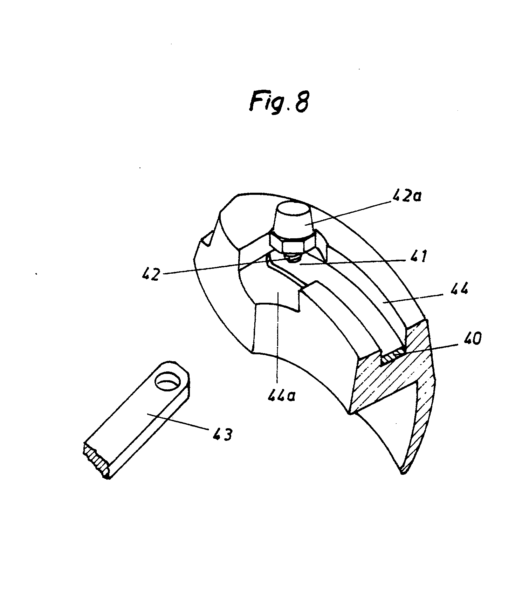

Bei dem auf Fig. 8 perspektivisch dargestellten Hufschuh ist der von der Nut 44 aufgenommene Stahlbügel 40 durch ein Stahlband 43 stabilisiert. Eine Schraube 42 dient jeweils zur Herstellung einer Verbindung zwischen einem Ende des Stahlbandes 43 und einem Ende des Bügels 40. Die Schraube wird durch ein Loch des Stahlbandes gesteckt und in eine Gewindebohrung 41 des Stahlbügels geschraubt. Zur

Aufnahme des Stahlbandes ist die Nut 44 durch eine
Ausnehmung 44a erweitert. Der Kopf der Schraube ist
dabei als Stollen 42a ausgebildet.

Patentansprüche

1. Pferdehufschuh aus Kunststoff mit folgenden Merkmalen:
Ein hufeisenförmiger Stahlbügel wird von einer am Hufschuh gebildeten Nut aufgenommen, die im Querschnittsbereich ihrer Öffnung etwas schmaler als der Stahlbügel ist.
- MIT dem Stahlbügel sind an einer Trittfläche des Hufschuhs vorstehende Stahlelemente verbunden

gekennzeichnet durch folgende weitere Merkmale:
Am Stahlbügel (20,30) sind Stollen befestigt.
- Die Stollen oder ihnen zugeordnete Verbindungselemente werden von einer zur Trittfläche (16) des Hufschuhs offenen Nut (13) aufgenommen

2. Pferdehufschuh nach Anspruch 1 dadurch gekennzeichnet, daß der im Querschnitt rechteckige Bügel von einem seinen Querschnitt angepaßten Teil (13a) der Nut aufgenommen ist, an dem sich im Öffnungsbereich ein schmalerer rechteckiger Teil (13b) der Nut anschließt.

3. Pferdehufschuh nach Anspruch 1 gekennzeichnet durch am Stahlbügel (20) angeformte Stollen (21).

4. Pferdehufschuh nach Anspruch 3 dadurch gekennzeichnet, daß die Stollen in der Draufsicht rechteckig ausgebildet sind und daß in Stollenlängsrichtung eine Schneide (21a) gebildet ist, die in Richtung der Bügelachse angeordnet ist.

5. Pferdehufschuh nach Anspruch 1 gekennzeichnet durch Stollen (33) mit Schrauben (33a),
die in am Stahlbügel (30) angeschweißten Muttern (31) einschraubbar sind.

6- Pferdehufschuh nach Anspruch 1 gekennzeichnet durch die nachfolgenden Merkmale:
- die Bügelenden sind durch ein Stahlband (43)
verbunden,
- die Verbindung zwischen Stahlband und Stahlbügel ist jeweils durch eine in den Stahlbügel eingeschraubte Schraube (42) hergestellt.

7. Pferdehufschuh nach Anspruch 6 dadurch gekennzeichnet, daß der Kopf der Schraube als
Stollen (42a) ausgebildet ist.

0013934

1/2

Fig.1

III III

I

IV IV

14 21 15 21 16

13b 15

Fig. 2

Fig. 3

Fig.4

Fig. 6

12

14 13b 16

11

13 12

20

13a 21 16

30

31

33a 32 33

Fig. 5

21a

20

21

Fig.7

33

32 33a

31

30

*Fig.8*

0013934

Nummer der Anmeldung

EP 80 10 019

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 557 916</u> (KOHRI) <br> * Ganzes Dokument * | 1-3 |
| | <u>GB - A - 679 973</u> (EISNER) <br> * Seite 1, Zeile 76 bis Seite 2, Zeile 7; Figur 2a * | 1,3 |
| | <u>GB - A - 231 571</u> (MARRIOTT) <br> * Seite 1, Zeilen 64-80 * | 1,3 |
| | <u>GB - A - 1 299 836</u> (TADSOWN) <br> * Seite 1, Zeile 71 bis Seite 2, Zeile 5; Figuren 2,3 * | 1,2 |
| | <u>DE - C - 97 536</u> (DAVIS-STEENERSON) <br> * Anspruch 1 * | 1 |
| | <u>GB - A - 356 070</u> (CHANOUX) <br> * Seite 1, letzter Absatz bis Seite 2, Zeile 29; Figuren 1, 8 * | 1,3 |
| | <u>DE - C - 538 237</u> (BRUGGER) <br> * Seite 2, Zeilen 32-52 * | 1 |
| | <u>DE - C - 40 476</u> (LUDECKE) <br> * Anspruch 1; Figur 1 * | 1,3 |

**KLASSIFIKATION DER ANMELDUNG (Int.Cl. 3)**

A 01 L 5/00
3/00

**RECHERCHIERTE SACHGEBIETE (Int. Cl. 3)**

A 01 L

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-05-1980 | |

EPA form 1503.1  06.78

**Europäisches Patentamt**

## EUROPÄISCHER RECHERCHENBERICHT

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | |
| | US - A - 1 938 471 (WAGENER)<br>* Seite 1, Zeilen 22-64; Figuren 3,7,8 * | 5-7 | |
| | -- | | |
| | DE - C - 583 283 (HESTESKO)<br>* Seite 2, Zeilen 4-13 * | 6 | |
| | -- | | |
| | GB - A - 22 996/ AD 1914 (PITTAWAY)<br>* Figuren 1,2 * | 5 | **RECHERCHIERTE SACHGEBIETE (Int. Cl. 3)** |
| | -- | | |
| | DE - C - 634 783 (MIOEN)<br>* Seite 1, Zeilen 35-71; Figur 1 * | 4 | |
| | ---- | | |

EPA Form 1503.2   06.78